# EUROPEAN PATENT SPECIFICATION

(11) **EP 3 269 680 B1**
(45) Date of publication and mention of the grant of the patent: **30.09.2020**
(21) Application number: 16179522.4
(22) Date of filing: 14.07.2016
(51) Int. Cl.: B66F 9/06, B66F 9/075

(54) **FLOOR CONVEYOR**
FLURFÖRDERER
CONVOYEUR AU SOL

(43) Date of publication of application: 17.01.2018
(73) Proprietor: Toyota Material Handling Manufacturing Sweden AB, 595 81 MJÖLBY (SE)
(72) Inventor: VALFRIDSSON, Göran, 595 54 MJÖLBY (SE)
(74) Representative: Zacco Sweden AB

(56) References cited:
- EP-A2- 2 678 748
- WO-A1-2012/139575
- GB-A- 1 548 307
- US-A1- 2010 114 405

## Description

The present invention relates to a method according to claim 1, a computer executable software according to claim 8, and a floor conveyor according to claim 9.

### PRIOR ART

In general order picking floor conveyors, are commonly used for handling goods in warehouses and distribution centres. These floor conveyors typically include a load carrier most commonly in the form of forks, and a power unit having a platform on which the operator can travel with the floor conveyor. A control handle is used for steering by a connection to a steerable wheel. The control handle includes all the operational controls necessary for driving and operating the load carrier etc. of the floor conveyor.

It is through EP2678748 known to manoeuvre an order picker truck by means of sensors and a controller. Several sensors are used for detecting objects located in first and second zones outside the order picker truck. A steer correction manoeuvre is automatically performed by steering the vehicle using the several sensors and the controller, for this manoeuvring.

Document US 2010/114405 A1 discloses a remotely controlled material handling vehicle with a multiple zone sensing.

### BRIEF DESCRIPTION OF THE INVENTION

An object of the present invention is to provide a floor conveyor that can be controlled by a remote control, such that the operator can operate the floor conveyor without using the operator controls on board. The remote control is thus used for operation of the floor conveyor without use of the control handle. In order for a secure operation of the floor conveyor a sensor device is comprised on the floor conveyor for secure operation with the use of the remote control. For example there is a need for detection of objects that are positioned in the travel path of the floor conveyor and implement measures to the floor conveyor such that collisions etc. can be avoided. It is important that the sensor device is operational at all moments.

In order solve at least some of the above discussed problems it is suggested a method according claim 1.

The method allows for a very convenient way of testing the function of the sensor device.

According to a further development there is proposed a method according to the above, wherein the predetermined object is the surface on which the floor conveyor is supported.

It is particularly favourable to use the surface on which the floor conveyor is operating to test the sensor device. This gives a very precise and expected object to measure on.

According to a further development there is proposed a method according to the above, wherein the security measures comprise complete shutdown of the floor conveyor.

For highest security a complete shutdown of the floor conveyor is preferred.

According to a further development there is proposed method according to the above, wherein the security measures involves shut down of all functions of the floor conveyor that requires detection of foreign objects inside a predetermined zone outside at least a section of the circumference of the floor conveyor, for their operation.

By applying security measures that still allow the manual operation of the floor conveyor without use of the sensor device, the operator can still perform his assignments even if the floor conveyor cannot detect foreign objects. For example he can manoeuvre the floor conveyor on board with normal operator controls.

According to a further development there is proposed a method according to the above, wherein the second predetermined distance is longer than the first predetermined distance, preferably the second distance is no longer than 1.5 times than the first predetermined distance.

By making the second predetermined distance longer than the first predetermined distance, there is safe guarding that the predetermined object is detected in the right spot.

According to a further development there is proposed a method of the above wherein the sensor device is the sole sensor device on board the floor conveyor that can detect objects inside a predetermined zone outside at least a section of the circumference of the floor conveyor, preferably the sole sensor device able to detect objects outside the circumference of the floor conveyor. According to a further development there is proposed a method of the above wherein the zone is provided as a plane.

A plane is preferred it simplifies evaluation of detection data as it is reduced in amount compared with a volume. It is also easy to set up and provides for that only a sole sensor device can be easier to implement.

The present invention also relates to computer executable software that when stored on a control unit of a floor conveyor is able to execute the method according to the claim 1.

By implementing the method into a control unit of the floor conveyor it is achieved automatic control of the method. The method can for example be performed at predetermined intervals without interaction of any operator etc.

The invention also relates to a floor conveyor comprising a sensor device for detecting objects inside a predetermined zone outside at least a section of the circumference of the floor conveyor and a sensor control unit, wherein the sensor device is arranged to be able to provide the sensor control unit with sensor data, wherein the sensor control unit is arranged to test the sensor device by implementing the method according to the above, preferably by means of a computer software according to the above.

The floor conveyor comprising the sensor device is able to detect objects outside the floor conveyor. This allows for operation of the floor conveyor more or less autonomously with a high security. This security is further augmented by the method of testing the sensor device.

The invention according to a further development relates to a floor conveyor according to the above, wherein the sensor device is mounted at an angle α with regard to the horizontal plane.

By mounting the sensor device at an angle to the horizontal plane a very convenient way of monitoring a larger volume and area is achieved. The use of only one sole sensor makes it possible to monitor essentially the complete front of the floor conveyor opposite a load carrier of it.

The invention according to a further development relates to a floor conveyor according to the above, wherein the sensor device is mounted at a predetermined distance from the surface on which the floor conveyor is supported, wherein this distance is sufficient for the sensor device to detect objects on a first side, a section of a second side, and a section of a third side of the floor conveyor, where in the first side is positioned opposite a load carrier.

The predetermined distance provides for that the sensor can detect at a further range than if the detecting device would be mounted adjacent the surface on which the floor conveyor is supported.

The invention according to a further development relates to a floor conveyor according to the above, wherein the sensor device is able to detect objects projecting into a predetermined zone positioned outside at least a section of the circumference of the floor conveyor for detection of objects positioned inside the predetermined detection zone by the sensor device, preferably the predetermined zone is provided as a predetermined plane.

By having a sensor device that detects in a zone ,in particular a plane, that is extending from the sensor device a further area can be detected than with a beam detecting device that essentially detects objects on a line extending from the sensor. Further by detecting in a plane and not in a volume it is easy to predict and install the sensor device for optimal operation.

Floor conveyor according to the above, wherein the sensor device is mounted in a central position on the longitudinal symmetry line of the floor conveyor

With a central position it is even easier to only implement a single sensor device for detecting more than one section of a side of the floor conveyor.

The invention according to a further development relates to a floor conveyor according to the above, wherein the sensor device is a laser sensor.

Laser sensor is particularly reliable and easy to configure. They are not either disturbed by for example the use of pressurized air usage as are ultra sound detectors are prone to.

The invention according to a further development relates to that the sensor device is the sole sensor device on board the floor conveyor that can detect objects inside a predetermined zone outside at least a section of the circumference of the floor conveyor, preferably the sole sensor device able to detect objects outside the circumference of the floor conveyor.

### LIST OF DRAWINGS

- Figure 1: Discloses a floor conveyor according to the invention.
- Figure 2: Discloses a floor conveyor according to Figure 1 with an extended plane according to the invention.
- Figure 3: Discloses a floor conveyor according to Figure 1 and 2 from another angle.
- Figure 4: Discloses a floor conveyor according to Figures 1-4 from above.
- Figure 5: Discloses a method according to the invention.

### DETAILED DESCRIPTION

The present disclosure relates to a floor conveyor comprising a sensor device for detecting objects. The floor conveyor can be any type of floor conveyor that is operable with such a sensor device. Examples of such floor conveyors are order picker trucks, stacker trucks, pallet trucks, reach trucks, or tow tractors having a wagon or a space for material handling. The sensor device of the disclosure should be able to detect objects that enter or are positioned within a certain distance of the floor conveyor. The main usage of a floor conveyor with a sensor device according to the disclosure is an order picker truck that is used with a remote control. In order to safe guard that the order picker truck does not hit objects or even damage itself or the surroundings a sensor device is required, when using the remote control. However the use of a remote control is not mandatory for the disclosure.

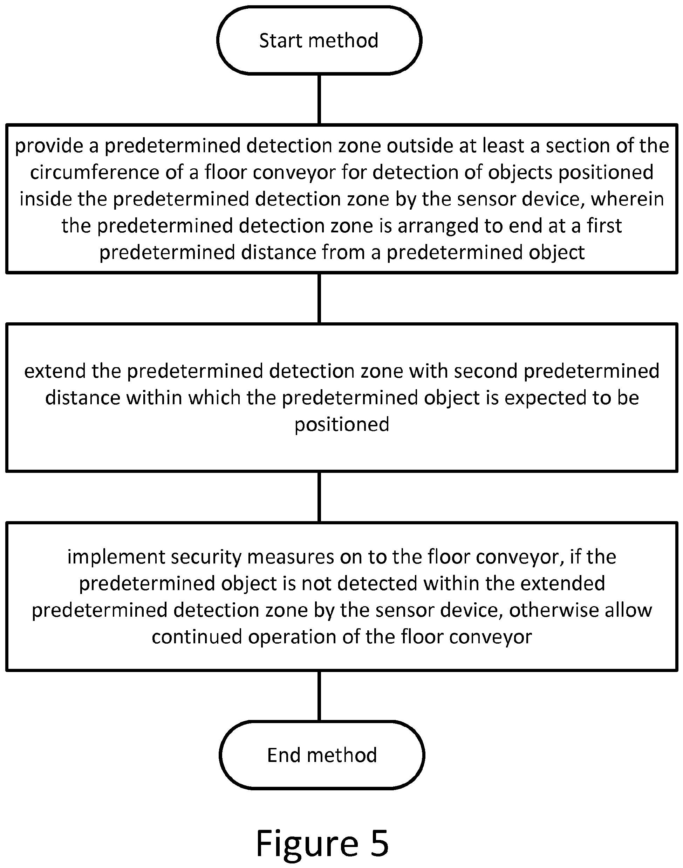

The present disclosure relates to a method as seen in Figure 5. The present disclosure thus relates to a method for operation of a floor conveyor, provided with a sensor device, comprising the steps of:
a) provide a predetermined detection zone outside at least a section of the circumference of the floor conveyor for detection of objects positioned inside the predetermined detection zone by the sensor device, wherein the predetermined detection zone is arranged to end at a first predetermined distance from a predetermined object,
b) extend the predetermined detection zone with second predetermined distance within which the predetermined object is expected to be positioned,
c) implement security measures on to the floor conveyor, if the predetermined object is not detected within the extended predetermined detection zone by the sensor device, otherwise allow continued operation of the floor conveyor.

The detection zone is provided by the sensor device. The aim for the detector is to detect objects that are positioned outside the circumference of the floor conveyor. The circumference is best seen in figure 5 of the disclosure as number 13. That is the circumference is to be construed as being the outer contour of the floor conveyor. Thus step a) is setting the normal operation of the floor conveyor when in material handling operations. The predetermined zone ends at a first predetermined distance from a predetermined object. In the next step b) the predetermined zone is extended. The extension is made with a second predetermined distance. The second predetermined distance is based on the position of an expected object. In most cases the second predetermined distance is the same as the first predetermined distance. Expected means thus that the method relies on an object that should be present when performing the method. However for safe guard reasons the second predetermined distance is made longer than the first predetermined distance. This will avoid unnecessary fault detection of the sensor device. It should be understood that it is important that the second predetermined distance is not too long, because if the sensor device is not in correct position the test should indicate that no detection of the predetermined object is achieved. As an example the second predetermined distance should not be more than 1.5 times the first predetermined distance. The expected object is preferred to be an object to which the distance is more or less constant over time. The predetermined object is preferably the surface on which the floor conveyor is supported, e.g. the floor or the tarmac on which the floor conveyor is operating. This provides for a very repeatable and easy way of executing the method. It is of course thinkable to perform the method by using another object such as a wall or a pillar as the object. In this case the method would require that the position of the floor conveyor in relation to the object is known when the method is performed. The position could be known by positioning the floor conveyor in a marked test position, or by manually entering the position into a control unit of the floor conveyor or by sending the position to the floor conveyor through an interface, or determining the position by a positioning system in the area where the floor conveyor is operating.

When the predetermined object is not detected by step b) security measures is applied according to the method. One security measure possible is to completely shut down the floor conveyor. However it is also possible to limit the functions of the floor conveyor. For example it is preferred that that the functions of the floor conveyor that is dependent on the function of the sensor device is shut down. Functions that are dependent on the sensor device could be for example allowable speeds of travel above a certain level, independent travel of the floor conveyor without the operator using the normal controls of the floor conveyor for example using a remote control, automatic travel of the floor conveyor following an object at one side for example a storage shelf etc.

The disclosure also relates to a computer executable software that when executed on a floor conveyor of the disclosure performs the method as discussed above. By implementing the method as a software the method can be made more independent from interaction of an operator and thus the testing of the sensor device can be made more reliable. The method can be performed at predetermined intervals without interaction of any operator etc. For example it is preferred that the method is always executed at start-up of the floor conveyor. This can be implemented when executing the method by the control unit of the floor conveyor.

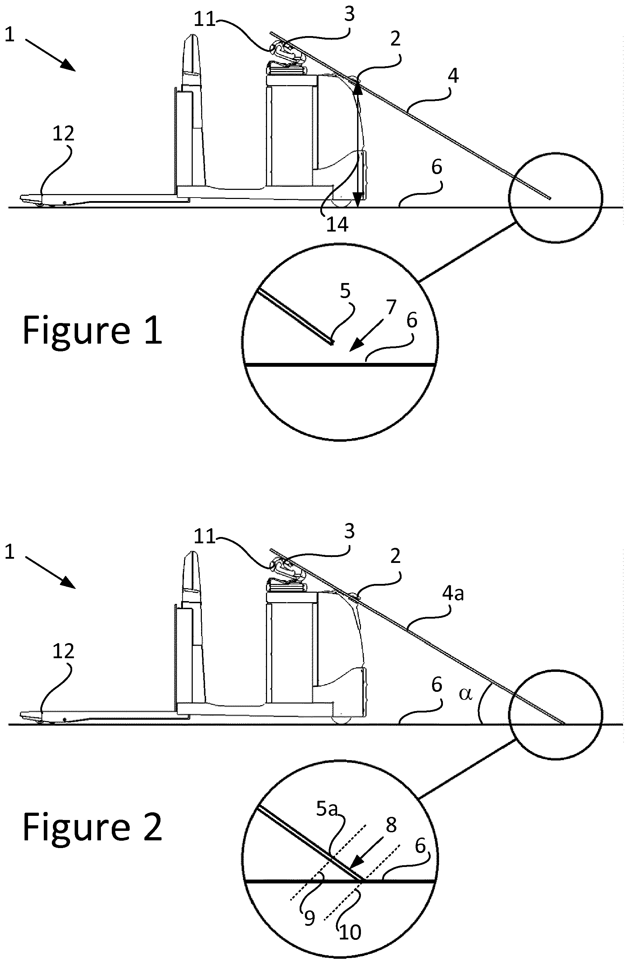

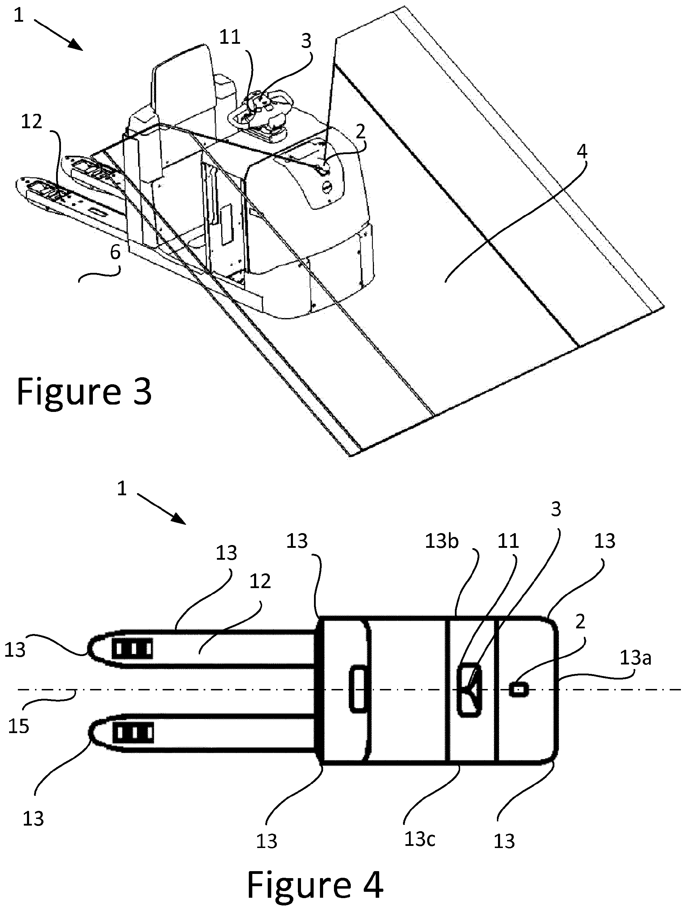

In Figure 1 there is disclosed the floor conveyor 1 with the sensor device 2. The floor conveyor further comprises the control unit 3 that is able to control the sensor device 2. The sensor device 2 is detecting objects within the predetermined detection zone 4. The zone 4 is best viewed in Figure 3, but the zone can also be seen from the side in Figure 1. The sensor device 2 is mounted at an angle α to the horizontal plane. The range of the detection zone 4 is in the lower part ended at an end side 5. Side 5 is positioned above the surface 6 on which the floor conveyor 1 is supported, more specifically the side 5. The side 5 thus leaves a gap 7 to the surface 6. This is preferably made in practice by limiting the time slot for which measurement is made of the sent out sensor waves from the sensor. The reason for providing the first predetermined distance 5 point is for the reason that otherwise a constant signal would be generated from the surface 6, when operating the floor conveyor 1. For the present disclosure it is not important how the shape of the zone is constituted. The shape of the zone in Figure 3 is only given as an example. The zone is preferably constituted as a plane 4.

Figure 2 discloses the core part of the disclosure. The zone 4 of Figure 1 is extended during the test of the sensor device 1, to an extended zone 4a as seen in Figure 2. If the sensor device 2 is functioning according to predetermined requirement, a signal will be obtained from the surface 6. The sensor device 2 then send a signal to the control unit 3 that can acknowledge continued operation without limitations. The gap 7 is covered by the extended zone 4a from the line 9 to the line 10 essentially ending on the surface 6. The distance of extension is preferably a little bit longer than the distance between line 9 and 10, to safe guard that an expected object is within the extend zone 4a. If the sensor device is broken, or pointing in wrong direction, no signal will be detected by the sensor device 2. Then the control unit 3 will not get a detection data and can take measures on this, with will be further explained below.

The angle α can be adjusted for the use of the floor conveyor. If a smaller angle is used the detection zone 4 will have a longer range on side 13a, Figure 4, of the floor conveyor. If a larger angle α is used a shorter detection zone 4 is achieved. By the angle α it provides for that only one sole sensor can be used for detection of objects supported on the surface 6 despite that the sensor device can be positioned higher up on the floor conveyor 6. In a preferred disclosure of the floor conveyor 1, the sensor device 2 has no further sensor device for detecting objects; the sensor device 2 is then the sole sensor device for this purpose on the floor conveyor 1.

The sensor device 2 is mounted at a predetermined distance 14, Figure 1 from the surface 6. The distance 14 is preferably at the upper portion of the housing of the floor conveyor 1. It should be understood that lower positions is possible but it is desired to keep the sensor device 2 away from the surface 6 in order to protect it from collisions and getting soiled. It is also preferable to have it higher in order to be able to detect objects protruding in space and not necessarily being supported on the surface 6.

It is preferred to have a sensor device that can detect objects positioned or/projecting within a plane 4. The plane 4 allows for a good coverage of the zone to be detected of. Existing detectors that essentially lock in a more restricted beam in one direction is more limited and are not as efficient as when applying a plane 4. Further by detecting in a plane 4 and not in a volume it is easy to predict and install the sensor device for optimal operation, i.e. the angle of the plane 4 can be used for extension and reduction of the desired detection zone in longitudinal direction of the plane 4. The extended zone 4a is preferably also a plane.

The preferred position of the sensor device 2 is in a central position on the longitudinal symmetry line 15 of the floor conveyor. In mounting in this position it is simpler to achieve a predetermined detection zone 4 that can detect objects on sides 13a, 13b and 13c of the floor conveyor, figure 4.

A laser sensor 2 is preferred to be used as the sensor device 2. The laser sensor can be applied to monitor a plane. Any laser sensor applicable to this is usable. It is preferred that the laser sensor 2 can monitor more than 180 degrees in front of it, preferably more than 240 degrees or even more preferred more than 300 degrees. This allows for detecting objects on at least sections of side 13a, 13b and 13c. In particular when the sensor device 2 is mounted a bit retracted from the most protruding point of any side to be monitored, such as side 13a as seen in Figure 1.

## Claims

1. Method for operation of a floor conveyor (1), provided with a sensor device (2), comprising the steps of:
a) provide a predetermined detection zone (4) outside at least a section of the circumference of the floor conveyor (1) for detection of objects positioned inside the predetermined detection zone (4) by the sensor device (2), wherein the predetermined detection zone (4) is arranged to end at a first predetermined distance from a predetermined object, **characterised by** comprising the steps of: Z
b) test the function of the sensor device (2) by extending the predetermined detection zone (4) with a second predetermined distance within which the predetermined object is expected to be positioned,
c) implement security measures on to the floor conveyor (1), if the predetermined object is not detected within the extended predetermined detection zone (4) by the sensor device (2), otherwise allow continued operation of the floor conveyor (1).

2. Method according to claim 1, wherein the predetermined object is the surface (6) on which the floor conveyor (1) is supported.

3. Method according to claim 1 or 2, wherein the security measures comprise complete shutdown of the floor conveyor (1).

4. Method according to claim 1 or 2, wherein the security measures involves shut down of all functions of the floor conveyor (1) that requires detection of foreign objects inside a predetermined zone outside at least a section of the circumference of the floor conveyor (1), for their operation.

5. Method according to any of the claims above, wherein the second predetermined distance is longer than the first predetermined distance, preferably the second distance is no longer than 1.5 times than the first predetermined distance.

6. Method according to any of the claims above, wherein the sensor device (2) is the sole sensor device (2) on board the floor conveyor (1) that can detect objects inside a predetermined zone outside at least a section of the circumference of the floor conveyor (1), preferably the sole sensor device (2) able to detect objects outside the circumference of the floor conveyor (1).

7. Method according to any of the claims above, wherein the zone (4) is provided as a plane.

8. Computer executable software that when stored on a control unit of a floor conveyor (1) is able to execute the method according to any of the claims 1 - 7.

9. Floor conveyor (1) comprising a sensor device (2) for detecting objects inside a predetermined zone outside at least a section of the circumference (13) of the floor conveyor (1) and a sensor control unit (3), wherein the sensor device (2) is arranged to be able to provide the sensor control unit (3) with sensor data, wherein the sensor control unit (3) is arranged to test the sensor device (2) by implementing the method according to any of the claims 1 - 7, preferably by means of a computer software according to claim 8.

10. Floor conveyor (1) according to claim 9, wherein the sensor device (2) is mounted at an angle (α) with regard to the horizontal plane.

11. Floor conveyor (1) according to claim 9 or 10, wherein the sensor device (2) is mounted at a predetermined distance (14) from the surface (6) on which the floor conveyor (1) is supported, wherein this distance (14) is sufficient for the sensor device (2) to detect objects on a first side (13a), a section of a second side (13b), and a section of a third side (13c) of the floor conveyor (1), where in the first side (13a) is positioned opposite a load carrier (12).

12. Floor conveyor (1) according to any of the claims 9 - 11, wherein the sensor device (2) is able to detect objects projecting into a predetermined zone (4) positioned outside at least a section of the circumference of the floor conveyor (1) for detection of objects positioned inside the predetermined detection zone (4) by the sensor device (2), preferably the predetermined zone (4) is provided as a predetermined plane (4).

13. Floor conveyor (1) according to any of the claims 9 - 12, wherein the sensor device (2) is mounted in a central position on the longitudinal symmetry line (15) of the floor conveyor (1).

14. Floor conveyor (1) according to any of the claims 9 - 13, wherein the sensor device (2) is a laser sensor.

15. Floor conveyor (1) according to any of the claims 9-14, wherein the sensor device (2) is the sole sensor device (2) on board the floor conveyor (1) that can detect objects inside a predetermined zone outside at least a section of the circumference (13) of the floor conveyor (1), preferably the sole sensor device (2) able to detect objects outside the circumference of the floor conveyor (1).

## Patentansprüche

1. Verfahren zum Betrieb eines mit einer Sensoreinrichtung (2) versehenen Flurförderers (1), umfassend die folgenden Schritte:
a) Bereitstellen eines vorbestimmten Erfassungsbereichs (4) außerhalb mindestens eines Abschnitts des Umfangs des Flurförderers (1) zur Erfassung von innerhalb des vorbestimmten Erfassungsbereichs (4) angeordneten Gegenständen durch die Sensoreinrichtung (2), wobei der vorbestimmte Erfassungsbereich (4) so angeordnet ist, dass er in einem ersten vorbestimmten Abstand von einem vorbestimmten Gegenstand endet,
**dadurch gekennzeichnet, dass** es folgende Schritte umfasst:
b) Überprüfen der Funktion der Sensoreinrichtung (2) durch Erweitern des vorbestimmten Erfassungsbereichs (4) um einen zweiten vorbestimmten Abstand, innerhalb dessen erwartet wird, dass der Gegenstand angeordnet wird,
c) Durchführen von Sicherheitsmaßnahmen am Flurförderer (1), sofern der vorbestimmte Gegenstand nicht innerhalb des erweiterten vorbestimmten Erfassungsbereichs (4) durch die Sensoreinrichtung (2) erfasst wird, andernfalls Ermöglichen des weiteren Betriebs des Flurförderers (1).

2. Verfahren nach Anspruch 1, wobei der vorbestimmte Gegenstand die Oberfläche (6) ist, auf welcher der Flurförderer (1) gelagert ist.

3. Verfahren nach Anspruch 1 oder 2, wobei die Sicherheitsmaßnahmen ein vollständiges Abschalten des Flurförderers (1) umfassen.

4. Verfahren nach Anspruch 1 oder 2, wobei die Sicherheitsmaßnahmen das Abschalten aller Funktionen am Flurförderer (1) umfassen, der die Erfassung von Fremdgegenständen innerhalb eines vorbestimmten Bereichs außerhalb mindestens eines Abschnitts des Umfangs des Flurförderers (1) für ihren Betrieb erfordert.

5. Verfahren nach einem der vorhergehenden Ansprüche, wobei der zweite vorbestimmte Abstand länger als der erste vorbestimmte Abstand ist, vorzugsweise der zweite Abstand nicht länger als das 1,5-fache als der erste vorbestimmte Abstand beträgt.

6. Verfahren nach einem der vorhergehenden Ansprüche, wobei die Sensoreinrichtung (2) die einzige Sensoreinrichtung (2) an Bord des Flurförderers (1) ist, die Gegenstände innerhalb eines vorbestimmten Bereichs außerhalb mindestens eines Abschnitts des Umfangs des Flurförderers (1) erfassen kann, vorzugsweise die einzige Sensoreinrichtung (2), die in der Lage ist, Gegenstände außerhalb des Umfangs des Flurförderers (1) zu erfassen.

7. Verfahren nach einem der vorhergehenden Ansprüche, wobei der Bereich (4) als eine Ebene vorgesehen ist.

8. Computerausführbare Software, die, wenn sie in einer Steuereinheit eines Flurförderers (1) gespeichert ist, in der Lage ist, das Verfahren nach einem der Ansprüche 1 bis 7 auszuführen.

9. Flurförderer (1), der eine Sensoreinrichtung (2) zur Erfassung von Gegenständen innerhalb eines vorbestimmten Bereichs außerhalb mindestens eines Abschnitts des Umfangs (13) des Flurförderers (1) und eine Sensorsteuereinrichtung (3) umfasst, wobei die Sensoreinrichtung (2) so ausgelegt ist, dass sie in der Lage ist, die Sensorsteuereinheit (3) mit Sensordaten zu versorgen, wobei die Sensorsteuereinrichtung (3) zum Überprüfen der Sensoreinrichtung (2) durch Umsetzen des Verfahrens nach einem der Ansprüche 1 bis 7, vorzugsweise mittels einer Computersoftware nach Anspruch 8, ausgelegt ist.

10. Flurförderer (1) nach Anspruch 9, wobei die Sensoreinrichtung (2) in einem Winkel (a) bezüglich der horizontalen Ebene montiert ist.

11. Flurförderer (1) nach Anspruch 9 oder 10, wobei die Sensoreinrichtung (2) in einem vorbestimmten Abstand (14) von der Oberfläche (6), auf der der Flurförderer (1) gelagert ist, montiert ist, wobei dieser Abstand (14) ausreichend ist, damit die Sensoreinrichtung (2) Gegenstände auf einer ersten Seite (13a), einem Abschnitt einer zweiten Seite (13b) und einem Abschnitt einer dritten Seite (13c) des Flurförderers (1) erfassen kann, wobei die erste Seite (13a) gegenüber einem Lastträger (12) angeordnet ist.

12. Flurförderer (1) nach einem der Ansprüche 9 bis 11, wobei die Sensoreinrichtung (2) in der Lage ist, Gegenstände zu erfassen, die in einen vorbestimmten Bereich (4) hineinragen, der außerhalb mindestens eines Abschnitts des Umfangs des Flurförderers (1) für die Erfassung von innerhalb des vorbestimmten Erfassungsbereichs (4) angeordneten Gegenständen durch die Sensoreinrichtung (2) befindlich ist, vorzugsweise der vorbestimmte Bereich (4) als eine vorbestimmte Ebene (4) vorgesehen ist.

13. Flurförderer (1) nach einem der Ansprüche 9 bis 12, wobei die Sensoreinrichtung (2) in einer mittigen Position auf der längslaufenden Symmetrielinie (15) des Flurförderers (1) montiert ist.

14. Flurförderer (1) nach einem der Ansprüche 9 bis 13, wobei die Sensoreinrichtung (2) ein Lasersensor ist.

15. Flurförderer (1) nach einem der Ansprüche 9 bis 14, wobei die Sensoreinrichtung (2) die einzige Sensoreinrichtung (2) an Bord des Flurförderers (1) ist, die Gegenstände innerhalb eines vorbestimmten Bereichs außerhalb mindestens eines Abschnitts des Umfangs (13) des Flurförderers (1) erfassen kann, vorzugsweise die einzige Sensoreinrichtung (2), die in der Lage ist, Gegenstände außerhalb des Umfangs des Flurförderers (1) zu erfassen.

## Revendications

1. Procédé de fonctionnement d'un chariot de manutention (1), muni d'un dispositif capteur (2), comprenant les étapes de :
a) la fourniture d'une zone de détection prédéterminée (4) à l'extérieur d'au moins une section de la circonférence du chariot de manutention (1) pour la détection d'objets positionnés à l'intérieur de la zone de détection prédéterminée (4) par le dispositif capteur (2), dans lequel la zone de détection prédéterminée (4) est conçue pour se terminer à une première distance prédéterminée d'un objet prédéterminé, **caractérisé en ce qu'**il comprend les étapes consistant à :
b) tester la fonction du dispositif capteur (2) en étendant la zone de détection prédéterminée (4) avec une deuxième distance prédéterminée à l'intérieur de laquelle l'objet prédéterminé devrait être positionné,
c) mettre en œuvre des mesures de sécurité sur le chariot de manutention (1), si l'objet prédéterminé n'est pas détecté dans la zone de détection prédéterminée étendue (4) par le dispositif capteur (2), sinon, permettre le fonctionnement continu du chariot de manutention (1).

2. Procédé selon la revendication 1, dans lequel l'objet prédéterminé est la surface (6) sur laquelle le chariot de manutention (1) est supporté.

3. Procédé selon la revendication 1 ou 2, dans lequel les mesures de sécurité comprennent l'arrêt complet du chariot de manutention (1).

4. Procédé selon la revendication 1 ou 2, dans lequel les mesures de sécurité impliquent l'arrêt de toutes les fonctions chariot de manutenion (1) qui nécessitent la détection d'objets étrangers à l'intérieur d'une zone prédéterminée à l'extérieur d'au moins une section de la circonférence du chariot de manutention (1), pour leur fonctionnement.

5. Procédé selon l'une quelconque des revendications précédentes, dans lequel la deuxième distance prédéterminée est plus longue que la première distance prédéterminée, de préférence la deuxième distance n'est pas plus longue que 1,5 fois la première distance prédéterminée.

6. Procédé selon l'une quelconque des revendications précédentes, dans lequel le dispositif capteur (2) est le seul dispositif capteur (2) à bord du chariot de manutention (1) qui peut détecter des objets à l'intérieur d'une zone prédéterminée à l'extérieur d'au moins une section de la circonférence du chariot de manutention (1), de préférence le seul dispositif capteur (2) capable pour détecter des objets en dehors de la circonférence du chariot de manutention (1).

7. Procédé selon l'une quelconque des revendications précédentes, dans lequel la zone (4) est prévue comme un plan.

8. Logiciel exécutable par ordinateur qui, lorsqu'il est stocké sur une unité de commande d'un chariot de manutention (1), est capable d'exécuter le procédé selon l'une quelconque des revendications 1 à 7.

9. Chariot de manutention (1) comprenant un dispositif capteur (2) pour détecter des objets à l'intérieur d'une zone prédéterminée à l'extérieur d'au moins une section de la circonférence (13) du chariot de manutention (1) et une unité de commande de capteur (3), dans lequel le dispositif capteur (2) est agencé pour pouvoir fournir à l'unité de commande de capteur (3) des données de capteur, l'unité de commande de capteur (3) étant agencée pour tester le dispositif de capteur (2) en mettant en œuvre le procédé selon l'une quelconque des revendications 1 à 7, de préférence au moyen d'un logiciel informatique selon la revendication 8.

10. Chariot de manutention (1) selon la revendication 9, dans lequel le dispositif capteur (2) est monté sous un angle (□) par rapport au plan horizontal.

11. Chariot de manutention (1) selon l'une quelconque des revendications 9 ou 10, dans lequel le dispositif capteur (2) est monté à une distance prédéterminée (14) de la surface (6) sur laquelle le chariot de manutention (1) est supporté, cette distance (14) étant suffisante pour que le dispositif capteur (2) détecte des objets sur le premier côté (13a), une section du deuxième côté (13b) et une section d'un troisième côté (13c) du chariot de manutention (1), le premier côté (13a) étant positionné en face d'un porte-charge (12).

12. Chariot de manutention (1) selon l'une quelconque des revendications 9 à 11, dans lequel le dispositif capteur (2) est capable de détecter des objets se projetant dans une zone prédéterminée (4) positionnée à l'extérieur d'au moins une section de la circonférence du chariot de manutention (1) pour la détection d'objets positionnés à l'intérieur de la zone de détection (4) prédéterminée par le dispositif capteur (2), de préférence la zone prédéterminée (4) est prévue comme un plan prédéterminé (4).

13. Chariot de manutention (1) selon l'une quelconque des revendications 9 à 12, dans lequel le dispositif capteur (2) est monté en position centrale sur la ligne de symétrie longitudinale (15) du chariot de manutention (1).

14. Chariot de manutention (1) selon l'une quelconque des revendications 9 à 13, dans lequel le dispositif capteur (2) est un capteur laser.

15. Chariot de manutention (1) selon l'une quelconque des revendications 9 à 14, dans lequel le dispositif capteur (2) est le seul dispositif capteur (2) à bord du chariot de manutention (1) qui peut détecter des objets à l'intérieur d'une zone prédéterminée à l'extérieur d'au moins une section de la circonférence (13) du chariot de manutention (1), de préférence le seul dispositif capteur (2) capable pour détecter des objets en dehors de la circonférence du chariot de manutention (1).
